# EUROPÄISCHE PATENTANMELDUNG

(11) **EP 2 058 542 A2**
(43) Veröffentlichungstag der Anmeldung: **13.05.2009**
(21) Anmeldenummer: 09001805.2
(22) Anmeldetag: 15.06.2005
(51) Int. Cl.: F16D 1/08, F16C 3/02

(54) **Getriebebaukasten und Antriebskomponente**

(30) Priorität: 03.08.2004 DE 102004037782
(62) Teilanmeldung aus: 05756162.3
(71) Anmelder: SEW-EURODRIVE GmbH & Co. KG, 76646 Bruchsal (DE)
(72) Erfinder: Ganz, Klaus, 76694 Forst (DE); Bolz, Heinrich, 76689 Karlsdorf-Neuthard (DE); Zimmermann, Heinrich, 76646 Bruchsal (DE)

(57) **Zusammenfassung**

Getriebe, Getriebebaukasten und Antriebskomponente,
umfassend zumindest eine Eintriebswelle, eine Abtriebswelle
wobei auf jeder Welle mindestens ein Verzahnungsteil mittels einer Welle-Nabe-Verbindung verbunden ist,
wobei die Welle-Nabe-Verbindung als Polygon-Verbindung ausgeführt ist, die mindestens zwei axiale Abschnitte umfasst,
wobei das Querschnitts-Profil der Polygon-Verbindung im ersten axialen Abschnitt sich vom Querschnitts-Profil der Polygon-Verbindung im zweiten axialen Abschnitt dadurch unterscheiden, dass sie mittels Drehung um einen nicht-verschwindenden Winkelbetrag ineinander übergehen,
wobei der Übergangsbereich einen elliptischen Verlauf des Durchmessers als Funktion des Radius umfasst, wobei der elliptische Verlauf stetig differenzierbar an den Bereich mit dem kleineren maximalen Außendurchmesser angeschlossen ist.

## Beschreibung

Die Erfindung **betrifft einen Getriebebaukasten und eine Antriebskomponente.**

Aus der EP 0 907 458 B1 ist ein Herstellverfahren für Polygon-Formen bei Wellen und Naben bekannt.

Der Erfindung liegt daher die Aufgabe zugrunde, im industriellen Wirtschaftsprozess den Umweltschutz zu verbessern, indem insbesondere die Standzeit der Vorrichtungen vergrößert wird.

**Erfindungsgemäß wird die Aufgabe bei dem Getriebebaukasten nach den in Anspruch 15 und bei der Antriebskomponente nach den in Anspruch 1 angegebenen Merkmalen gelöst.**

Wichtige Merkmale bei der Welle sind, dass sie zumindest zwei axiale Abschnitte und einen axial zwischen diesen beiden Abschnitten angeordneten Übergangsbereich umfasst,
wobei die beiden axialen Abschnitte verschieden sind,
insbesondere innerhalb mindestens einer die Achse der Welle enthaltenden Schnittebene die beiden Abschnitte einen an den Übergangsbereich angrenzenden, verschieden großen maximalen Außendurchmesser aufweisen,
wobei der Übergangsbereich, insbesondere in einer die Achse der Welle enthaltenden Schnittebene, einen elliptischen Verlauf des Durchmessers als Funktion der axialen Länge umfasst,
wobei der elliptische Verlauf stetig differenzierbar an den Bereich mit dem kleineren maximalen Außendurchmesser angeschlossen ist.

Von Vorteil ist dabei, dass die Festigkeit sehr stark erhöhbar ist, insbesondere bei Verwendung anderer Funktionen im Übergangsbereich.

Bei einer vorteilhaften Ausgestaltung liegen die Fertigungstoleranzen oder Abweichungen beim Fertigen des elliptischen Verlaufs im Bereich der ISO-Qualität IT6. Von Vorteil ist dabei, dass im Rahmen dieser Qualität auch Abweichungen oder andere Funktionsverläufe verwendbar sind. Beispielsweise sind auch entsprechend angepasste Polynom-Funktionen oder andere Funktionen hoher Ordnung verwendbar, wenn sie innerhalb des zu dieser IT-Qualität zugehörigen Toleranzbandes um die elliptische Funktion herum liegen.

Wichtige Merkmale der Erfindung bei dem Getriebe sind, dass es mindestens eine Eintriebswelle und eine Abtriebswelle umfasst,
wobei auf jeder Welle mindestens ein Verzahnungsteil mittels einer Welle-Nabe-Verbindung verbunden ist,
wobei die Welle-Nabe-Verbindung als Polygon-Verbindung ausgeführt ist, die mindestens zwei axiale Abschnitte umfasst,
wobei das erste Querschnitts-Profil der Polygon-Verbindung im ersten axialen Abschnitt sich vom zweiten Querschnitts-Profil der Polygon-Verbindung im zweiten axialen Abschnitt dadurch unterscheidet, dass das erste Profil mittels Drehung um einen nichtverschwindenden Winkelbetrag in das zweite Profil übergeht.

Von Vorteil ist dabei, dass eine sehr tragfähige und belastbare und/oder drehsteife Verbindung für die Verzahnungsteile vorgesehen ist. Somit ist die Standzeit des gesamten Getriebes verbessert. Insbesondere wenn mit dem das Getriebe umfassenden Antrieb auf Block gefahren wird, ist das Zerstörungsrisiko klein, weil die Polygon-Verbindung extrem belastbar ist und auch keine durch Kerbwirkungen verursachten Ausfälle wahrscheinlich sind. Weil somit die hohe Standzeit einen Austausch alter Getriebe verzögert, ist daher auch der Umweltschutz verbessert.

Weiterer Vorteil ist die einfache Montierbarkeit. Denn das Verzahnungsteil ist nur aufzustecken auf die Welle. Hingegen ist bei Getrieben des Standes der Technik die Passfederverbindung bekannt. Diese erfordert aber das Einlegen einer Passfeder und darauf folgendes Aufstecken des Verzahnungsteils. Somit ist beim Stand der Technik nicht nur das Montieren schwieriger sondern es ist sogar ein zusätzliches Teil, nämlich die Passfeder, erforderlich. Bei der Erfindung entfällt dieses zusätzliche Teil für alle Baugrößen und Varianten von Getrieben. Somit ist bei der Erfindung die Anzahl der Teile reduzierbar, die Verwaltung der Teile einfacher und Lagervolumina, Lagerkosten und Herstellkosten reduzierbar.

Darüber hinaus ist Herstellung der Welle mitsamt dem Polygon-Profil sehr einfach möglich, insbesondere in einer Maschine in einer Aufspannung. Im Gegensatz dazu muss beim Stand der Technik eine Nut für die Passfeder in einer zweiten Maschine eingearbeitet werden nach dem Fertigen der Welle, beispielsweise durch Fräsen.

Auch die Wiederverwendung der erfindungsgemäßen Welle mit Polygon-Verbindung innerhalb des Getriebebaukastens führt zu einer Reduzierung der Anzahl der Teile und somit auch der Lagerkosten.

Bei einer vorteilhaften Ausgestaltung umfasst das Getriebe eine oder mehrere Zwischenwellen, auf denen ebenfalls Verzahnungsteile mittels der als Polygon-Verbindung ausgeführten Welle-Nabe-Verbindung verbunden sind. Von Vorteil ist dabei, dass auch dort eine einfache Montage und eine hohe Belastbarkeit vorsehbar sind.

Bei einer vorteilhaften Ausgestaltung ist jede Welle mit den auf ihr verbundenen Verzahnungsteilen mittels der Polygon-Welle-Naben-Verbindung verbunden. Von Vorteil ist dabei, dass insgesamt vom Getriebe ein hohes Drehmoment übertragbar ist. Außerdem ist eine baukasteninterne Schnittstelle mit Polygon-Profil geschaffen, wodurch die Verzahnungsteile und Wellen wiederverwendbar sind innerhalb des Baukastens - auch bei anderen Baugrößen.

Bei einer vorteilhaften Ausgestaltung ist ein dritter axialer Abschnitt der Polygon-Verbindung vorgesehen, dessen Querschnitts-Profil mit dem ersten nicht aber mit dem zweiten Abschnitt identisch ist. Von Vorteil ist dabei, dass eine Verspannung des Verzahnteils nach Aufstecken desselben vorhanden ist.

Bei einer vorteilhaften Ausgestaltung sind weitere Abschnitte, insbesondere unendlich viele, mit weiteren einer jeweiligen Verdrehung zugeordneten Winkelbeträgen vorgesehen. Insbesondere sind derart viele Abschnitte vorgesehen, dass der Winkel eine Funktion des axialen Länge ist. Von Vorteil ist dabei, dass die Kerbwirkung vermindert ist, da keine oder nur kleine sprunghaften Änderungen innerhalb des Polygon-Bereiches vorhanden sind.

Bei einer vorteilhaften Ausgestaltung ist die Funktion symmetrisch zu einem axialen Punkt. Von Vorteil ist dabei, dass die Fertigung des Profils besonders einfach ist, die Kerbwirkung extrem verringert ist und die Verspannungskräfte ebenfalls symmetrisch sich ausbilden.

Bei einer vorteilhaften Ausgestaltung ist das Polygon eine Hypotrochoide oder aus Hypotrochoiden-Abschnitten zusammengesetzt. Von Vorteil ist dabei, dass eine besonders hoch belastbare Welle-Nabe-Verbindung vorhanden ist, die zusätzlich besonders schnell und kostengünstig fertigbar ist.

Bei einer vorteilhaften Ausgestaltung weist das Polygon zwischen 3 und 8 Ecken auf, insbesondere 4 Ecken oder 5 Ecken haben sich als vorteilhaft erwiesen.

Bei einer vorteilhaften Ausgestaltung ist der maximale Wellenaußendurchmesser eine monoton fallende Funktion des Parameters L. Von Vorteil ist dabei, dass die Montierbarkeit besonders einfach ist. Es ist nämlich die Welle durch eine für das große Lager vorgesehene Ausnehmung im Gehäuse einführbar und dann mit dem zuerst eingeführten Wellenende in das kleinere Lager einsteckbar.

Weitere Vorteile ergeben sich aus den Unteransprüchen.

### Bezugszeichenliste

1 zylindrischer Wellenabschnitt
2 erster Abschnitt mit Polygon-Profil
3 zweiter Abschnitt mit verdrehtem Polygon-Profil
4 dritter Abschnitt mit Polygon-Profil wie beim ersten Abschnitt 2
5 zylindrischer Wellenabschnitt
6 Fase
10 Nabe
12 Fase
61 zylindrischer Wellenabschnitt
62 Abschnitt mit Polygon-Profil
63 Übergangsbereich

Die Erfindung wird nun anhand von Abbildungen näher erläutert:

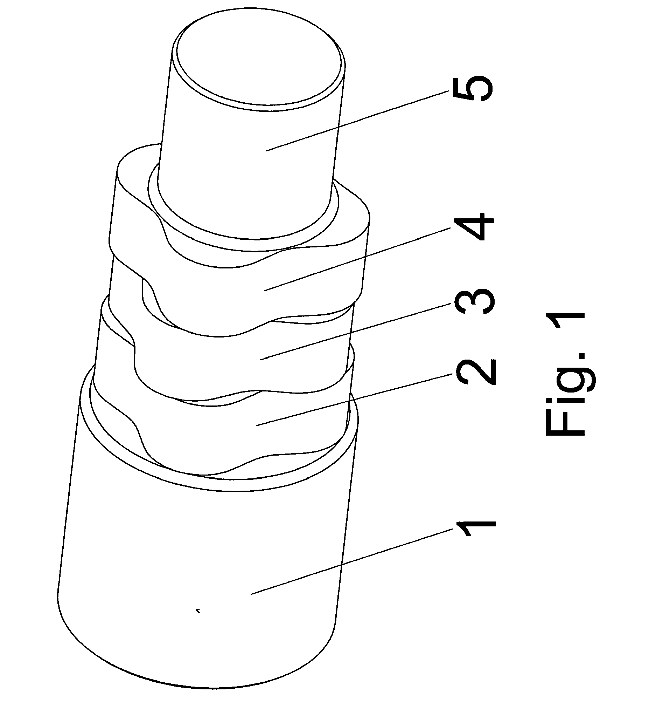

In der Figur 1 ist die Zwischenwelle eines erfindungsgemäßen Getriebes gezeigt. Dabei weist der zylindrische Wellenabschnitt 1 den größten Durchmesser auf. Dort ist auch der Lagersitz des größten Lagers angebracht.

In axialer Richtung, gekennzeichnet durch den Parameter L, folgt dann der erste Abschnitt 2 mit Polygon-Profil. Danach folgt der zweite Abschnitt 3 mit verdrehtem Polygon-Profil. Der darauf folgende dritte Abschnitt 4 mit Polygon-Profil ist wieder wie beim ersten Abschnitt 2 ausgeführt.

Das Wellenende ist als zylindrischer Wellenabschnitt 5 mit kleinstem Außendurchmesser ausgeführt, wo wiederum ein Lagersitz und gegebenenfalls Dichtungssitz vorgesehen ist.

Der maximale Wellenaußendurchmesser ist eine monoton fallende Funktion des Parameters L. Somit ist eine besonders einfache Montierbarkeit des Getriebes erreichbar.

Das Verzahnungsteil ist mit einer entsprechend geformten Polygon-Nabe ausgeführt, deren axiale Breite größer ist als die axiale Breite des Abschnitts 3. Somit ist nach dem Aufsetzen des Verzahnungsteiles eine Verspannung im Verbindungsbereich vorhanden, die zu einer festen hoch-belastbaren Verbindung führt, die ein sehr hohes Drehmoment übertragen kann. Insbesondere ist die Polygon-Verbindung fester und höher belastbar als eine Passfederverbindung bei entsprechendem Verzahnungsteil und entsprechender Zwischenwelle.

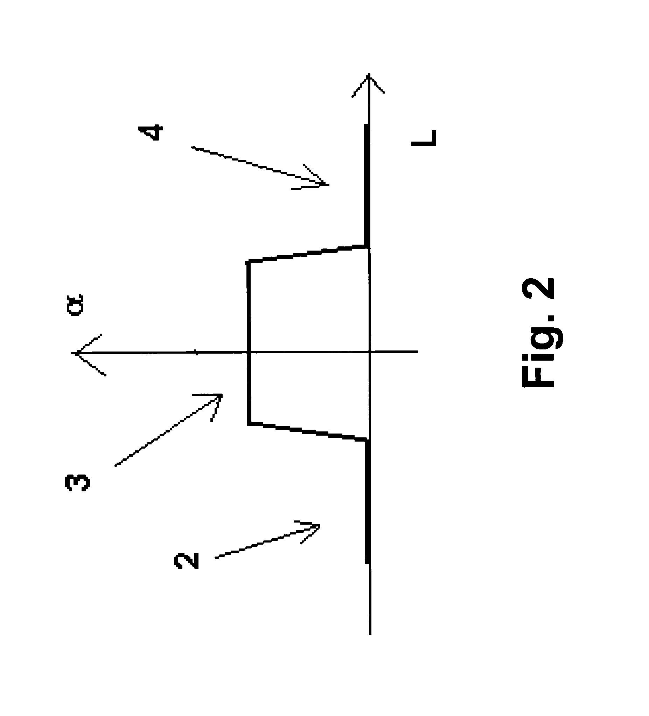

Figur 2 zeigt den Drehwinkelverlauf in Abhängigkeit von der axialen Länge. Im ersten Abschnitt 2 ist der Verdrehwinkel des Profils Null. Danach steigt er an auf einen Wert für den zweiten Abschnitt 3 und fällt dann wieder ab auf Null im dritten Abschnitt 4. Der Wert beträgt zwischen 0,1° und 1°. Besonders vorteilhaft haben sich Werte um 0,3° bis 0,5° herum erwiesen.

Eine besonders schnelle und kostengünstige Fertigung der Polygon-Ausformung der Welle und Nabe ist dann der Fall, wenn das Polygon eine Hypotrochoide ist oder aus Hypotrochoiden-Abschnitten zusammengesetzt ist. Darüber hinaus ist die Festigkeit und

Belastbarkeit der Verbindung in diesem Fall sehr hoch. Dies gilt auch insbesondere für Polygone mit 4 Ecken oder zumindest 3 bis 8 Ecken.

In weiteren erfindungsgemäßen Ausführungsbeispielen sind auch Verdrehwinkelverläufe mit mehreren Stufen vorteilhaft.

Das Getriebe ist beispielsweise ein ein- oder mehrstufiges Stirnrad-Getriebe, wobei die Verzahnungsteile Stirnräder sind.

Bei anderen erfindungsgemäßen Getrieben sind auch Kegelräder als Verzahnungsteile oder Spiroplan-verzahnte Teile als Verzahnungsteile vorsehbar.

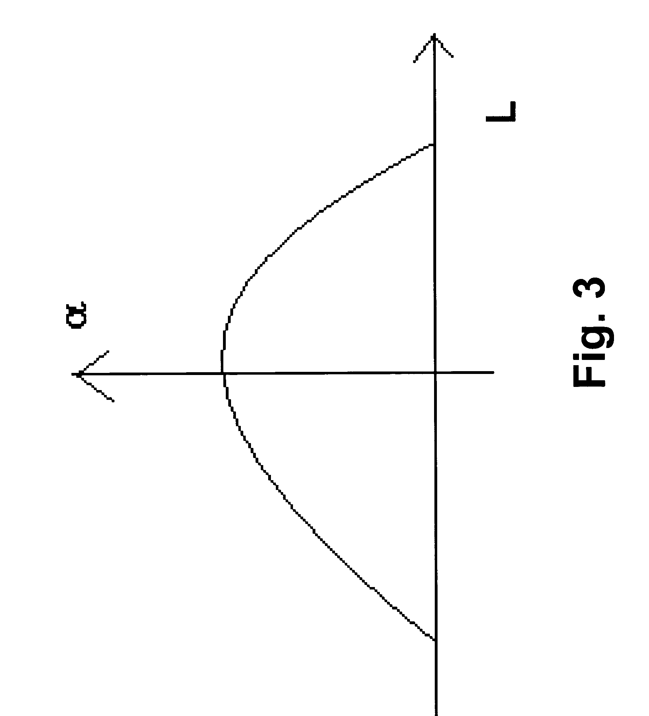

Figur 3 zeigt einen kontinuierlichen Verlauf des Verdrehwinkels, der zu besonders geringer Kerbwirkung führt. Außerdem ist die Fertigungsqualität sehr gut beherrschbar.

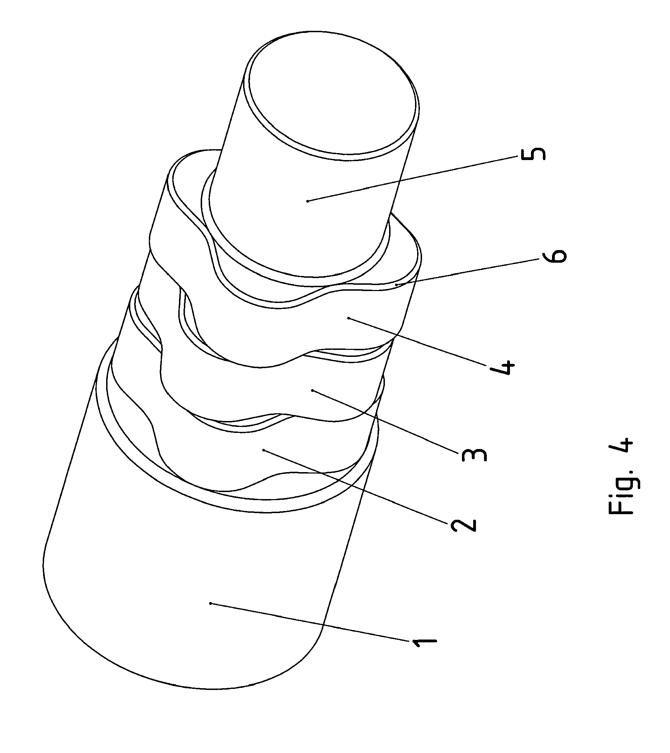

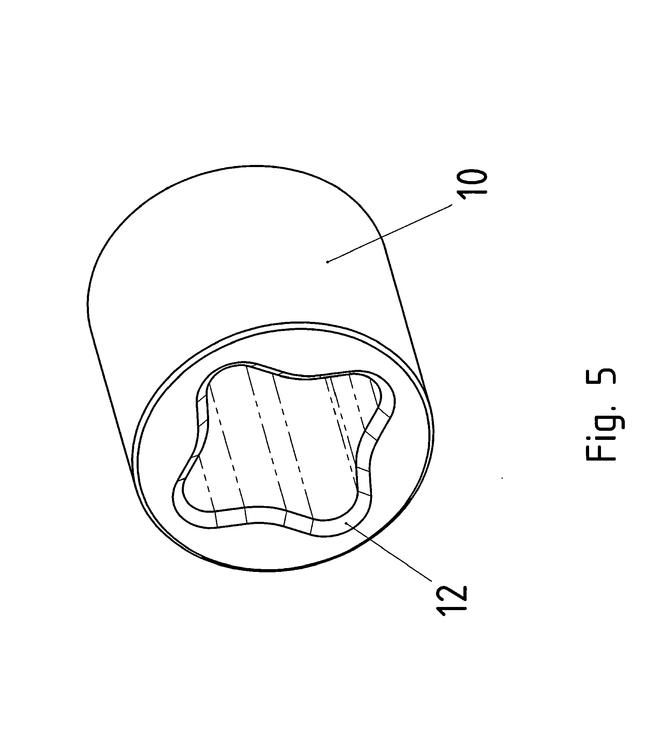

Figur 4 zeigt eine weitere erfindungsgemäße Ausführungsform bei der Welle. Figur 5 zeigt eine zugehörige Nabe 10. Die Welle weist an der Kante des dritten axialen Polygon-Abschnittes eine Fase 6 auf. Wichtig ist dabei, dass die Fase im Verlauf der Form des Polygons folgt. Somit ist ein Einfädeln oder Einführen in die zugehörige Nabe erleichtert. Die Fertigung der Fase ist für den Fachmann zwar ungewöhnlich, ist aber in einfacher Weise mit modernen Produktionsmaschinen ausführbar und daher kostengünstig.

Die weiteren axialen Abschnitte weisen ebenfalls eine Fase an den hervortretenden Kantenbereichen auf.

Die Nabe 10 weist einen polygonalen Abschnitt in Hohlform auf, wobei wiederum eine Fase 12 vorhanden ist, die das Einfädeln verbessert.

Für alle erfindungsgemäßen Antriebskomponenten, wie Motor, Elektromotor, Bremse, Getriebe Kupplung oder dergleichen, ist also charakteristisch, dass eine Fase dieser besonderen Form, also der polygonalen Form, vorhanden ist.

Bei einer weiteren erfindungsgemäßen Ausführungsform ist im zweiten axialen Abschnitt 3 und im ersten axialen Abschnitt 2 der Figur 4 die Fase derart vergrößert, dass ein stetiger Übergang zwischen den axialen Bereichen erfolgt und keine unstetigen Bereiche vorhanden sind. Somit ist die Belastbarkeit der Welle noch weiter erhöht.

Somit ist klar, dass die Erfindung nicht nur bei einem Getriebe anwendbar ist sondern auch bei einer anderen Antriebskomponente, wie Elektromotor, Getriebe, Bremse, Kupplung oder dergleichen. Die Erfindung ist auf alle Welle-Nabe-Verbindungen anwendbar, also auch für Teile, die auf eine Welle formschlüssig aufgesteckt werden, wie Zahnräder oder Zykloscheiben eines Zyklogetriebes oder Bremsbelagträger einer Bremse oder Kupplungsteil einer Kupplung. Die vorgenannten Merkmale der Erfindung, insbesondere auch die Fase in polygonaler Form sind also nicht nur in einem Getriebe vorsehbar sondern auch in jeder weiteren Antriebskomponente, wie beispielsweise Elektromotor, Bremse oder Kupplung.

Zur weiteren Verbesserung der Tragfähigkeit ist es wichtig und wesentlich zwischen den zylindrischen Wellenabschnitten und den Polygon-Wellenabschnitten einen Übergangsbereich zu schaffen, der die bei der Drehmomentübertragung auftretenden Spannungen verringert.

Es hat sich herausgestellt, dass eine einfache Rundung, wie beispielsweise Kreisrundung, im Übergangsbereich eine Sollbruchstelle darstellen kann.

Daher ist ein wesentliches zusätzliches Merkmal der Erfindung bei der Ausführung des Übergangsbereiches erkannt worden.

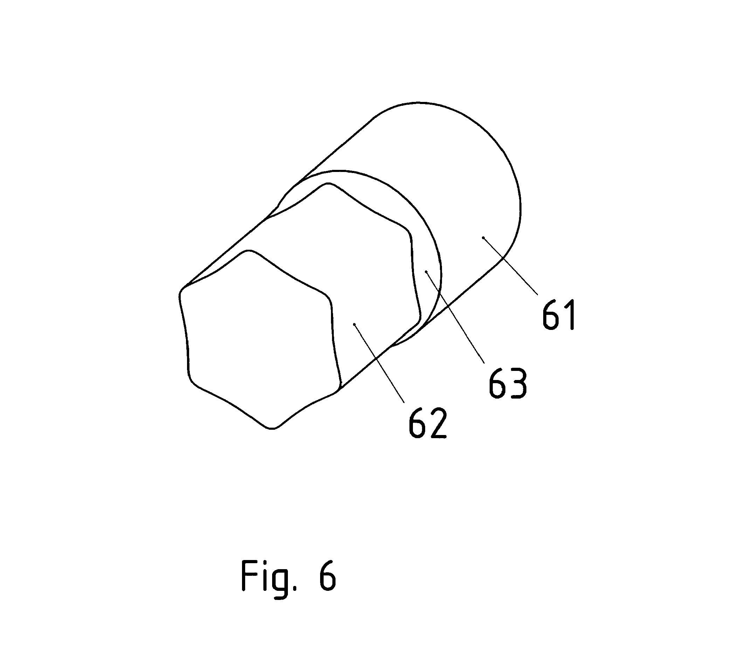

Dazu ist in der Figur 6 nochmals dargestellt, dass ein Übergangsbereich 63 zwischen dem zylindrischen Wellenabschnitt 61 und dem Polygon-Abschnitt 62 vorgesehen ist.

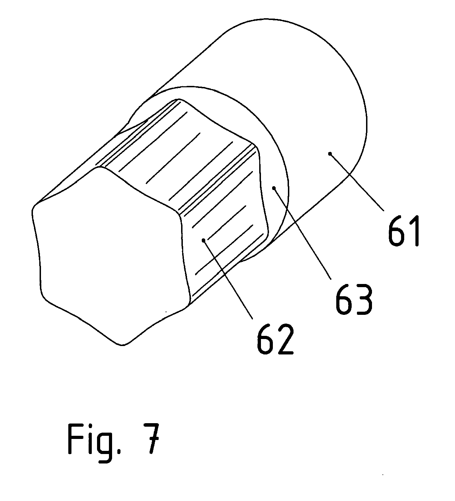

In Figur 7 ist ein graugestufte Version der Figur 6 abgebildet. Durch die Graustufung ist der Übergangsbereich besonders gut sichtbar.

In Figur 8a ist eine Seitenansicht durch die Welle gezeigt.

In Figur 8b ist ein Längsschnitt durch die Welle gezeigt.

In Figur 8c ist eine Draufsicht durch die Welle gezeigt.

In Figur 8d ist eine Vergrößerung des Verlaufes im Übergangsbereich gezeigt, der dem gekennzeichneten Bereich X der Figur 8b entspricht.

Der Übergangsbereich ist bei allen Wellen einsetzbar, die einen Polygonwellenabschnitt und einen benachbarten zylindrischen Wellenabschnitt aufweisen.

Vom Polygonwellenabschnitt 62 ausgehend verläuft der Außendurchmesser des Übergangsbereiches 63 in axialer Richtung ansteigend, wobei die Steigung von Null langsam in axialer Richtung zunimmt.

Um die Festigkeit zu steigern ist ein axial möglichst langer Übergangsbereich 63 zu schaffen. Jedoch ist die axiale Länge für den Übergangsbereich 63 begrenzt. Bei der Erfindung hat sich überraschend herausgestellt, dass auch auf axial kurzer Länge ein Übergangsbereich 63 vorsehbar ist, der zu einer hohen Festigkeit führt und die Dauerbruchfestigkeit vergrößert.

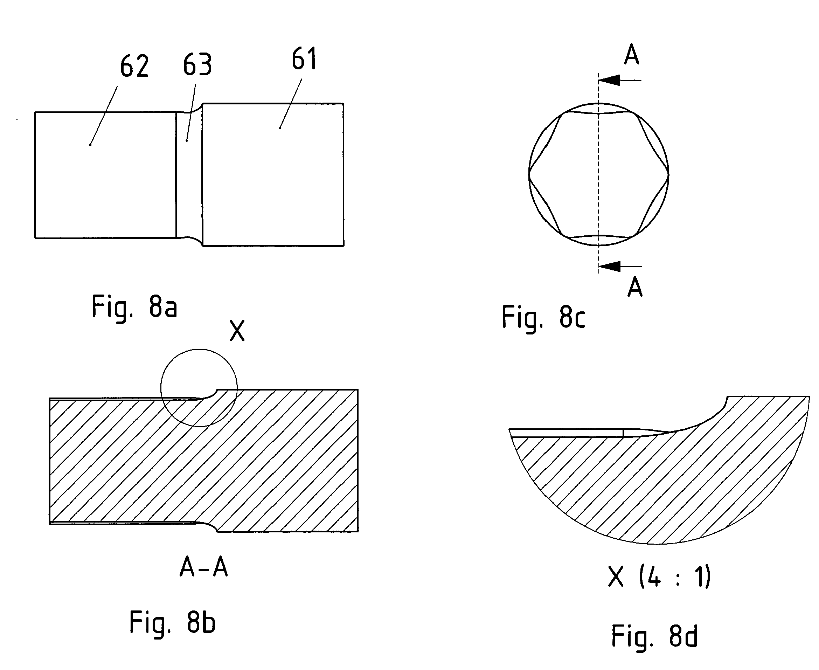

Dazu wird gemäß Figur 8d der Verlauf des Durchmessers und/oder der Exzentrizität der Hypotrochoiden im Übergangsbereich 63 in axialer Richtung elliptisch gewählt. Die Ellipse ist dabei so gewählt, dass sie stetig und differenzierbar an den angrenzenden Durchmesser des Polygonbereichs 62 angeschlossen ist.

Aus der Drehmomentübertragung und/oder einer Umlaufbiegebelastung resultierende Spannungsüberhöhungen werden dadurch erheblich reduziert. Die Folge ist eine deutliche Festigkeitssteigerung der Welle in diesem Bereich. Bei gleicher Belastung der Welle wird somit das Versagen durch Rissbildung und/oder Dauerbruch im Übergangsbereich ganz verhindert oder aber zumindest deutlich verzögert.

Abweichungen von diesem ellipsenförmigen Verlauf sind nur im Rahmen der Fertigungstoleranzen erlaubt, sollten also bei üblichen Getrieben, die von einem Motor mit einigen kW Leistung angetrieben werden, unter 50 µm sein. Vorteiliger und festigkeitserhöhender ist jedoch eine Abweichung von weniger als 10 µm.

Je nach Baugröße sind die Abweichungen betragsmäßig verschieden. Wesentlich ist, dass die Fertigungstoleranzen im Bereich der IT-Qualität IT6 der ISO-Toleranzreihe liegen.

Der elliptische Verlauf hat gegenüber polynominalem oder Radius-Verläufen überraschenderweise sehr vorteilige Wirkung, insbesondere festigkeitserhöhende. Selbstverständlich ist ein Polynom extrem hoher Ordnung an den erfindungsgemäßen ellipsenförmigen Verlauf anpassbar mit geringen Abweichungen. Je höher die Ordnung des Polynoms desto geringer sind die Abweichungen zur Ellipse wählbar.

Bei weiteren erfindungsgemäßen Ausführungsbeispielen ist der zylindrische Wellenbereich kleiner als jeder Durchmesser im Polygon-Wellenbereich. Dabei ist dann ebenfalls der genannte elliptische Verlauf vorteiligerweise festigkeitserhöhend, wobei die Ellipse dann auch wiederum an den Bereich mit kleinerem Durchmesser stetig differenzierbar angeschlossen ist.

Das Auslaufen der Ellipse am Bereich mit größerem Durchmesser kann undifferenzierbar erfolgen oder auch mit einem Kantenbruch, also einer Abrundung der entstehenden Kante, beispielsweise mit einem Radius von 0,5 mm.

Bei der Erfindung wird zwar von Funktionsverläufen, wie Ellipse und Polynom, gesprochen und es werden Begriffe aus dem Bereich mathematischer Funktionen verwendet, jedoch sind die technischen Realisierungen nur mit numerisch gesteuerten Fertigungsmaschinen ausgeführt und somit werden statt der Funktionen immer nur zwischen vorgebbaren Stützpunkten interpolierte Verläufe vorgegeben. Die erfindungsgemäßen Ausführungen sind also immer im Rahmen dieser technischen Realisierungsmöglichkeiten zu sehen.

## Patentansprüche

1. Antriebskomponente,
umfassend mindestens eine Welle-Nabe-Verbindung,
**dadurch gekennzeichnet, dass**
die Welle-Nabe-Verbindung als Polygon-Verbindung ausgeführt ist, die mindestens zwei axiale Abschnitte umfasst,
wobei das erste Querschnitts-Profil der Polygon-Verbindung im ersten axialen Abschnitt sich vom zweiten Querschnitts-Profil der Polygon-Verbindung im zweiten axialen Abschnitt **dadurch** unterscheidet, dass das erste Profil mittels Drehung um einen nichtverschwindenden Winkelbetrag in das zweite Profil übergeht,
wobei axial zwischen diesen beiden Abschnitten ein Übergangsbereich angeordnet ist, insbesondere in einer die Achse der Welle enthaltenden Schnittebene, wobei der Übergangsbereich einen elliptischen Verlauf des Durchmessers als Funktion der axialen Länge umfasst,
wobei der elliptische Verlauf stetig differenzierbar an den Bereich mit dem kleineren maximalen Außendurchmesser angeschlossen ist,
insbesondere wobei das Polygon zwischen 3 und 8 Ecken aufweist, insbesondere wobei das Polygon 4 Ecken oder 5 Ecken aufweist.

2. Antriebskomponente nach Anspruch 1,
**dadurch gekennzeichnet, dass**
die Antriebskomponente als Getriebe ausgeführt ist, umfassend mindestens eine Eintriebswelle und eine Abtriebswelle,
wobei auf jeder Welle mindestens ein Verzahnungsteil mittels einer Welle-Nabe-Verbindung verbunden ist,
wobei die Welle-Nabe-Verbindung als Polygon-Verbindung ausgeführt ist, die mindestens zwei axiale Abschnitte und mindestens einen Übergangsbereich umfasst, der sich an einen oder an beide Abschnitte anschließt.

3. Antriebskomponente nach mindestens einem der vorangegangenen Ansprüche,
**dadurch gekennzeichnet, dass**
das Getriebe eine oder mehrere Zwischenwellen umfasst, auf denen ebenfalls Verzahnungsteile mittels der als Polygon-Verbindung ausgeführten Welle-Nabe-Verbindung verbunden sind.

4. Antriebskomponente nach mindestens einem der vorangegangenen Ansprüche,
**dadurch gekennzeichnet, dass**
ein dritter axialer Abschnitt der Polygon-Verbindung vorgesehen ist, dessen Querschnitts-Profil mit dem ersten nicht aber mit dem zweiten Abschnitt identisch ist.

5. Antriebskomponente nach mindestens einem der vorangegangenen Ansprüche,
**dadurch gekennzeichnet, dass**
der nicht-verschwindende Winkelbetrag einen Wert zwischen 0,1° und 1° beträgt, insbesondere zwischen 0,3° und 0,5°.

6. Antriebskomponente nach mindestens einem der vorangegangenen Ansprüche,
**dadurch gekennzeichnet, dass**
weitere Abschnitte, insbesondere unendlich viele, mit weiteren einer jeweiligen Verdrehung zugeordneten Winkelbeträgen vorgesehen sind.

7. Antriebskomponente nach mindestens einem der vorangegangenen Ansprüche,
**dadurch gekennzeichnet, dass**
jedem axialen Abschnitt ein Winkel zugeordnet ist, wobei derart viele Abschnitte vorgesehen sind, dass der Winkel eine Funktion des axialen Länge ist.

8. Antriebskomponente nach mindestens einem der vorangegangenen Ansprüche,
**dadurch gekennzeichnet, dass**
die Funktion symmetrisch zu einem axialen Punkt ist.

9. Antriebskomponente nach mindestens einem der vorangegangenen Ansprüche,
**dadurch gekennzeichnet, dass**
das Polygon eine Hypotrochoide ist oder aus Hypotrochoiden-Abschnitten zusammengesetzt ist, wobei im Übergangsbereich die Exzentrizität der Hypotrochoiden elliptisch vom kleineren auf den größeren Durchmesser der axialen Abschnitte der Welle anwächst.

10. Antriebskomponente nach mindestens einem der vorangegangenen Ansprüche,
**dadurch gekennzeichnet, dass**
der maximale Wellenaußendurchmesser eine monoton fallende Funktion des Parameters L, also der axialen Position, ist.

11. Antriebskomponente nach mindestens einem der vorangegangenen Ansprüche,
**dadurch gekennzeichnet, dass**
der maximale Wellenaußendurchmesser jeder Welle, insbesondere Zwischenwelle und Abtriebswelle und Eintriebswelle, eine monoton fallende Funktion des Parameters L ist.

12. Antriebskomponente nach mindestens einem der vorangegangenen Ansprüche,
**dadurch gekennzeichnet, dass**
die Welle und/oder Nabe der Polygonverbindung mindestens eine Fase aufweist.

13. Antriebskomponente nach mindestens einem der vorangegangenen Ansprüche,
**dadurch gekennzeichnet, dass**
mindestens ein axialer Abschnitt der Polygon-Verbindung eine Fase zum Einfädeln aufweist.

14. Antriebskomponente nach mindestens einem der vorangegangenen Ansprüche,
**dadurch gekennzeichnet, dass**
die Fase einen polygonalen Verlauf aufweist.

15. Getriebebaukasten mit einer Antriebskomponente nach mindestens einem der vorangegangenen Ansprüche,
umfassend mindestens zwei Baugrößen, die durch mindestens einen jeweiligen physikalischen Parameter kennzeichenbar sind, wie maximal übertragbares Drehmoment, Nennmoment, Achshöhe, Achsabstand oder dergleichen,
wobei jede Baugröße mindestens zwei verschiedene Getriebe umfasst, deren Verzahnungsteile verschiedene Verzahnungsparameter, wie Modul, Zähnezahl, Teilkreis, Wälzkreis oder dergleichen, aufweisen,
**dadurch gekennzeichnet, dass**
ein Verzahnungsteil mit einer Polygon-Nabe innerhalb des Baukastens mindestens bei zwei verschiedenen Getrieben vorgesehen ist.
